# EUROPÄISCHE PATENTANMELDUNG

(11) **EP 1 361 400 A2**
(43) Veröffentlichungstag der Anmeldung: **12.11.2003**
(21) Anmeldenummer: 03009990.7
(22) Anmeldetag: 02.05.2003
(51) Int. Cl.: F25B 41/06, F16K 31/64

(54) **Thermostatisches Expansionsventil**

(30) Priorität: 08.05.2002 DE 10220416
(71) Anmelder: Behr GmbH & Co., 70469 Stuttgart (DE)
(72) Erfinder: Geskes, Peter, Dr., 70469 Stuttgart (DE)
(74) Vertreter: Grauel, Andreas, Dr.

(57) **Zusammenfassung**

Die Erfindung betrifft ein thermostatisches Expansionsventil (1) für Kraftfahrzeug-Klimaanlagen mit in einem Gehäuse (2) angeordneten Hochdruck- und Niederdruckdurchgang (3, 4), einem Drosselorgan (5) im Hochdruckdurchgang (3), einem Steuerkopf (9), der ein durch eine Membran (12) vom Niederdruckdurchgang (4) getrenntes Steuermedium (13) enthält, wobei die Membran (12) mechanisch mit dem Drosselorgan (5) verbunden ist, und mit einer extern ansteuerbaren Einrichtung zur Übersteuerung des Drosselorgans (5).

Es wird vorgeschlagen, dass das Drosselorgan (5) als Absperrorgan ansteuerbar ist, und zwar vorzugsweise durch Kühlung des Steuerkopfes (9) mittels eines Peltier-Elements (17).

## Beschreibung

Die Erfindung betrifft ein thermostatisches Expansionsventil für Kraftfahrzeug-Klimaanlagen nach dem Oberbegriff des Patentanspruches 1, bekannt durch die DE-A 38 29 101 der Anmelderin.

Das bekannte Expansionsventil dient der Abregelung der Überhitzung des aus einem Verdampfer einer Kraftfahrzeug-Klimaanlage austretenden Kältemitteldampfes. Dabei erfolgt die Abregelung durch Drosselung des Kältemittelmassenstromes mittels eines Drosselorgans, welches im Hochdruckdurchgang des Expansionsventils angeordnet ist und durch einen thermostatischen Steuerkopf über einen Stößel angesteuert wird. Zusätzlich - zu dieser thermostatischen Steuereinrichtung - weist das bekannte Expansionsventil eine extern ansteuerbare Einrichtung auf, mittels welcher von außen in die thermostatische Regelung eingegriffen wird, um die Überhitzungstemperatur des Kältemitteldampfes in vorgegebenen Grenzen zu halten. Eine dieser extern ansteuerbaren Einrichtungen ist als Heizplatte, in Form eines PTC-Widerstandes oder eines Peltier-Elementes ausgebildet. Durch Anlegen einer Spannung an den PTC-Widerstand oder das Peltier-Element wird eine Heizwirkung erzielt, so dass ein im Steuerkopf befindliches Steuermedium erwärmt wird. Dadurch öffnet das Drosselventil, und der Kältemittelmassenstrom steigt an - dies führt zu einer Verringerung der Überhitzung des Kältemitteldampfes, der durch den Niederdruckdurchgang (so genannter Sauggasraum) des Expansionsventils strömt. Das bekannte Expansionsventil arbeitet somit ausschließlich als Drossel- und als Regelventil zur Regelung des Kältemittelmassenstromes.

In heutigen Kraftfahrzeugen werden zur Steigerung des Komforts bereits zwei Klimaanlagen, eine Front- und eine Heck-Klimaanlage, d. h. auch zwei Verdampfer eingesetzt, wobei jeder Verdampfer wiederum ein eigenes Expansionsventil besitzt. Zusätzlich besteht die Forderung, dass beide Verdampfer unabhängig voneinander abgeschaltet werden können. Diese Abschaltung erfolgte bisher durch Magnetventile, die zusätzlich in die Kältemittelleitung eingebaut wurden, d. h. für jeden Verdampfer waren ein eigenes Expansionsventil und ein zusätzliches Magnetventil als Absperrventil vorgesehen. Diese Lösung machte neben dem Magnetventil auch eine zusätzliche Verrohrung, Verschraubung und Dichtungen notwendig, was zu erheblichen Zusatzkosten für die Klimaanlage führte.

Es ist daher Aufgabe der vorliegenden Erfindung, eine Lösung für eine kostengünstige Abschaltung eines Verdampfers einer Kraftfahrzeug-Klimaanlage zu finden.

Die Lösung dieser Aufgabe erfolgt durch die Merkmale des Patentanspruchs 1 und besteht im Prinzip darin, dass ein bekanntes thermostatisches Expansionsventil mit einer extern ansteuerbaren Einrichtung durch Änderung der Ansteuerung in ein Absperrventil abgewandelt wird. Dies geschieht dadurch, dass das Expansionsventil in der Weise angesteuert wird, dass das Drosselorgan als Absperrorgan wirkt und den Kältemittelmassenstrom unterbindet. Als Vorteil wird damit erreicht, dass ein zusätzliches Absperrventil in Form eines Magnetventils entfallen kann. Dies bringt eine nicht unerhebliche Kosteneinsparung.

Gemäß einer vorteilhaften Weiterbildung der Erfindung erfolgt die Ansteuerung des Drossel- bzw. Absperrorgans durch ein Peltier-Element, welches das im Steuerkopf befindliche Steuermedium kühlt, was zur Schließung des Drosselquerschnittes und damit zur Abschaltung des Verdampfers führt. Das Peltier-Element liegt also mit seiner kalten Seite wärmeleitend am Steuerkopf an, währen die warme Seite dem Steuerkopf abgewandt ist. Das Peltier-Element stellt - insbesondere im Hinblick auf den Preis eines komplett montierten Magnetventils - eine kostengünstige Lösung dar, um ein Absperrorgan für den Verdampfer darzustellen.

Vorteilhafte Weiterbildungen der Erfindung ergeben sich aus den Unteransprüchen, insbesondere dadurch, dass die warme Seite des Peltier-Elements zusätzlich gekühlt wird, entweder über eine metallische Wärmebrücke oder über einen von Kältemitteldampf durchströmten Bypasskanal, der die auf der warmen Seite des Peltier-Elements entstehende Wärme abführt. Durch diese Kühlungsmaßnahmen wird der Temperaturunterschied zwischen heißer und kalter Seite des Peltier-Elements herabgesetzt und die Kühlungsleistung des Peltier-Elements gesteigert. Somit wird die Ansteuerung des Absperrorgans effizienter, d. h. die aufzuwendende elektrische Leistung für das Peltier-Element wird reduziert.

Ausführungsbeispiele der Erfindung sind in der Zeichnung dargestellt und werden im Folgenden näher beschrieben. Es zeigen
- Fig. 1: ein thermostatisches Expansionsventil mit Peltier-Element,
- Fig. 2: ein thermostatisches Expansionsventil mit Peltier-Element und Wärmebrücke und
- Fig. 3: ein thermostatisches Expansionsventil mit Peltier-Element und Kältemittel-Bypassleitung.

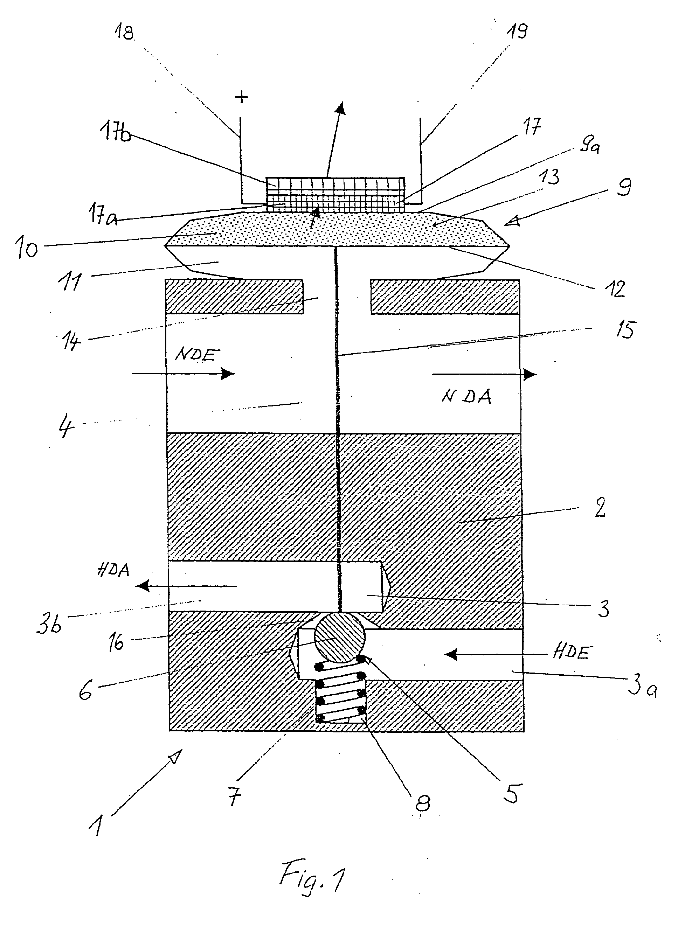

**Fig. 1** zeigt ein thermostatisches Expansionsventil 1 mit einem Gehäuse (Ventilblock) 2 mit einem Hochdruckdurchgang 3 sowie einem Niederdruckdurchgang 4. Der Hochdruckdurchgang 3 wird durch zwei versetzt zueinander angeordnete Kanäle 3a, 3b gebildet, zwischen welchen ein Drosselorgan 5 angeordnet ist. Letzteres besteht aus einer Ventilkugel 6 und einer diese belastenden Ventilfeder 7, die sich andererseits in einer Sacklochbohrung 8 des Gehäuses 2 abstützt. Oberhalb des Gehäuses 2 ist ein Steuerkopf 9 angeordnet, der als tellerförmige Kapsel mit einem oberen Steuerraum 10 und einem unteren Ausgleichsraum 11 ausgebildet ist, wobei beide Räume 10, 11 durch eine Membran 12 hermetisch voneinander getrennt sind. Der Steuerraum 10 ist mit einem Steuermedium 13 gefüllt, z. B. Gas oder Kältemittel. Der Ausgleichsraum 11 steht über einen Kanal 14 mit dem Niederdruckdurchgang 4 in Fluidverbindung. An der Membran 12 ist ein Stößel 15 befestigt, der gleitend durch das Gehäuse 2 bis zu der Ventilkugel 6 geführt und mit dieser verbunden ist. Somit wird eine Bewegung der Membran 12 mechanisch über den Stößel 15 auf die Ventilkugel 6 übertragen. Zwischen den beiden Hochdruckkanälen 3a und 3b ist ein kegelförmig ausgebildeter Ventilsitz 16 angeordnet, der mit der Ventilkugel 6 korrespondiert, d. h. dass Drosselorgan 5 bildet.

Der Steuerkopf 9 weist eine in der Mitte angeordnete, plan ausgebildete Oberseite 9a auf, auf der ein Peltier-Element 17, bestehend aus zwei übereinander angeordneten unterschiedlichen Metall- bzw. Halbleiterplatten 17a, 17b, wärmeleitend befestigt ist. An dieses Peltier-Element 17 sind in bekannter Weise zwei elektrische Leiter 18, 19 angeschlossen, über welche eine Spannung an das Peltier-Element 17 angelegt werden kann. Es ist darauf hinzuweisen, dass die untere Platte 17a, die wärmeleitend mit der Oberseite 9a des Steuerkopfes 9 verbunden ist, die "kalte Seite" des Peltier-Elements 17 darstellt, während die obere Scheibe 17b die "warme Seite" des Peltier-Elements 17 darstellt, die also bei Anlegen einer Spannung Wärme abgibt.

Das Expansionsventil 1 mit Peltier-Element 17 arbeitet wie folgt: in den Hochdruckkanal 3a tritt Kältemittel, vom nicht dargestellten Kondensator einer Kraftfahrzeug-Klimaanlage kommend, ein und strömt zwischen Ventilkugel 6 und Ventilsitz 16 hindurch in den ausgangsseitigen Hochdruckkanal 3b. Das Drosselorgan 5 ist in der in der Zeichnung dargestellten Position geöffnet, d. h. zwischen Ventilkugel 6 und Ventilsitz 16 befindet sich ein Ringspalt, d. h. ein freier Strömungsquerschnitt für das Kältemittel, welches durch das Drosselorgan 5 in seinem Druck reduziert (entspannt) wird. Das Kältemittel tritt dann - nach Verlassen des Expansionsventils 1 - in einen nicht dargestellten Verdampfer der Kraftfahrzeug-Klimaanlage ein, wo es verdampft wird und den Verdampfer in dampfförmiger Phase, d. h. als überhitzter Dampf verlässt - in diesem Zustand tritt das Kältemittel entsprechend dem Pfeil NDE (Niederdruckeintritt) in den Niederdruckgang 4 ein und tritt entsprechend dem Pfeil NDA (Niederdruckaustritt) wieder aus dem Gehäuse 2 aus. Danach strömt der Kältemitteldampf zu einem nicht dargestellten Verdichter der Kraftfahrzeug-Klimaanlage bzw. wird von diesem angesaugt. Der Niederdruckdurchgang 4 wird daher auch als Saugraum und das ihn durchströmende Kältemittel als Saugdampf bezeichnet. Über den Kanal 14 kommuniziert der Saugdampf mit dem Ausgleichsraum 11 des Steuerkopfes 9 und beaufschlagt somit mit seinem Druck und seiner Temperatur die Membran 12. Es ergibt sich daher ein Differenzdruck der Drücke in dem Steuerraum 10 und dem Ausgleichsraum 11, welcher eine Bewegung der Membran 12 und damit des Stößels 15 und der Ventilkugel 6 bewirkt. Die genaue Wirkungsweise dieser thermostatischen Drosselregelung ist aus dem eingangs genannten Stand der Technik bekannt.

Dieser thermostatischen Drosselregelung ist die Kühlung des Steuerkopfes 9 mittels des Peltier-Elements 17 überlagert, d. h. durch einen externen Eingriff. Durch Anlegen einer Spannung an das Peltier-Element 17 über die elektrischen Leiter 18, 19 kühlt sich die untere Platte 17a ab und bewirkt damit eine Abkühlung des Steuermediums 13 im Steuerraum 10. Dies hat zur Folge, dass sich das Steuermedium 13, ein Kältemittel, zusammenzieht und kondensiert, d. h. der Druck im Steuerraum 10 nimmt ab, und die Membran 12 wölbt sich nach oben aus, was wiederum eine Bewegung des Stößels 15 nach oben und damit eine Schließung des Ventils 5 in der Weise zur Folge hat, dass sich die Ventilkugel 6 an den Ventilsitz 16 anlegt und damit den Durchgang zwischen den beiden Kanälen 3a und 3b versperrt. Damit ist der Verdampfer (nicht dargestellt) abgeschaltet; das Expansionsventil wirkt als Absperrventil.

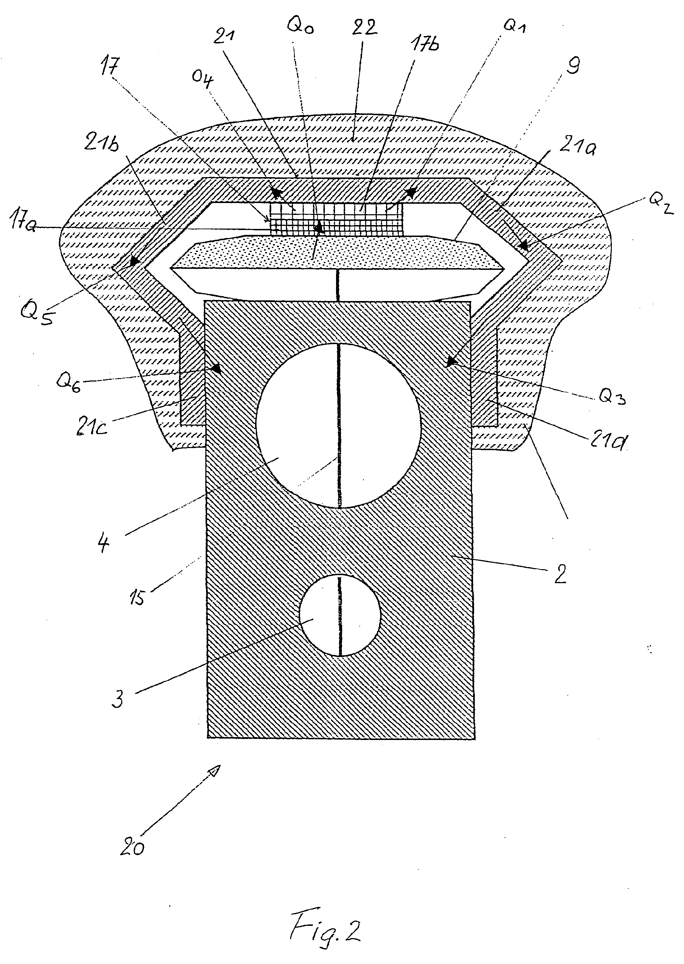

**Fig. 2** zeigt ein abgewandeltes Expansionsventil 20, wobei im Folgenden für gleiche Teile gleiche Bezugsziffern wie in Fig. 1 verwendet werden. Der Ventilblock 2 ist hier - gegenüber der Darstellung in Fig. 1 - um 90 ° um seine Hochachse gedreht, d. h. man blickt auf die Querschnitte des Niederdruckdurchganges 4 und des Hochdruckdurchganges 3 sowie auf den Stößel 15. Auf der Oberseite der oberen Scheibe 17b des Peltier-Elements 17, d. h. der warmen Seite ist in wärmeleitender Verbindung eine so genannte Wärmebrücke 21 angeordnet, die sich über seitliche Arme 21a, 21b bis in den oberen Bereich des Ventilblockes 2 erstreckt und diesen mit den Kontaktstücken 21 c, 21d derart umfasst, dass eine gute wärmeleitende Verbindung zum metallischen Ventilblock hergestellt ist. Die Brücke 21 selbst ist aus einem guten, z. B. metallischen Wärmeleiter hergestellt. Der Wärmefluss aus der oberen Scheibe 17b in die Wärmebrücke 21 bis hin zum Ventilblock 2 ist durch die Pfeile Q1, Q2 bis Q6 dargestellt. Der Pfeil Q0 dagegen bezeichnet die aus dem Steuerkopf 9 in die untere Scheibe 17a, d. h. die kalte Seite des Peltier-Elements 17 fließende Wärmemenge. Zusätzlich ist die Wärmebrücke 21 in ihrem gesamten äußeren Bereich durch eine thermoisolierende Schicht 22 gegen Wärmeabstrahlung und Konvektion mit der Umgebungsluft abgeschirmt. Durch diese Isolation 22 ist sichergestellt, dass der größte Teil der abgegebene Wärme Q1 bis Q6 in den kalten Ventilblock 2 fließt.

Infolge dieser gezielten Wärmeabfuhr von der warmen Seite 17b des Peltier-Elements 17 wird die Temperaturdifferenz zwischen den beiden Seiten 17a, 17b verringert, so dass für das Peltier-Element 17 eine größere Kälte- bzw. Kühlleistung, bezogen auf die elektrische Eingangsleistung, erzielt werden kann.

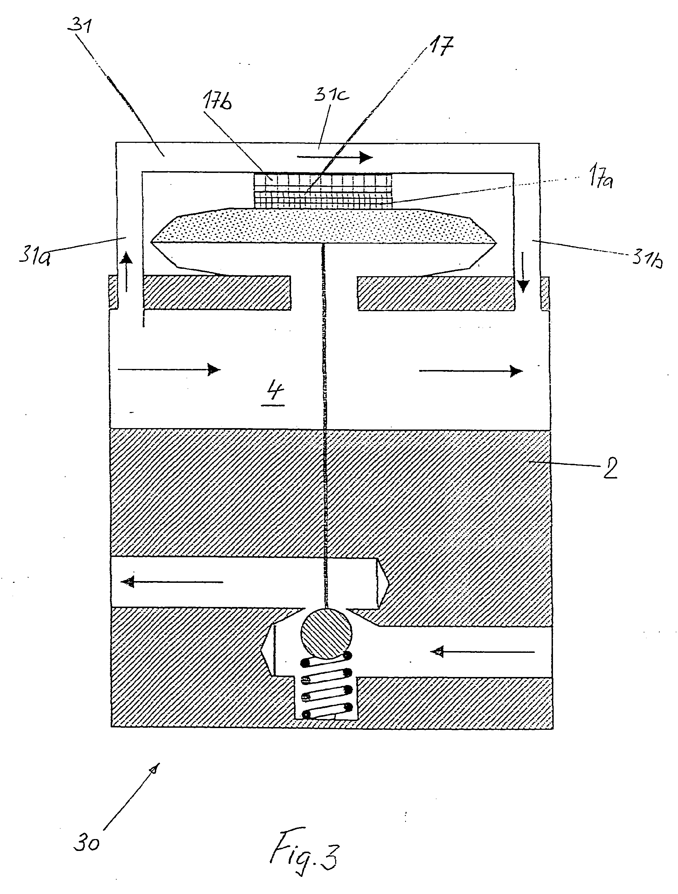

**Fig. 3** zeigt ein weiteres abgewandeltes Expansionsventil 30, wobei wiederum gleiche Bezugszahlen für gleiche Teile verwendet werden. Als Alternative zu dem Ausführungsbeispiel gemäß Fig. 2 ist hier ein Bypass-Kanal 31 an den Niederdruckdurchgang 4 bzw. den Sauggasraum angeschlossen. Dieser Bypass-Kanal weist einen Eintrittsbereich 31a, einen Austrittsbereich 31b und einen mittleren Bereich 31c auf, der unmittelbar über und in wärmeleitender Verbindung mit der warmen Seite 17b des Peltier-Elements 17 angeordnet ist. Der Bypass-Kanal 31 wird somit vom kalten Kältemittelsaugdampf durchströmt, der damit die von der warmen Seite 17b abgegebene Wärme abführt. Auch durch diese Maßnahme kann die Temperaturdifferenz zwischen den beiden Komponenten 17a und 17b des Peltier-Elements reduziert und somit die Kühlleistung des Elements 17 erhöht werden.

## Patentansprüche

1. Thermostatisches Expansionsventil für Kraftfahrzeug-Klimaanlagen mit in einem Gehäuse (2) angeordneten Hochdruck- und Niederdruckdurchgang (3, 4), einem Drosselorgan (5) im Hochdruckdurchgang (3), einem Steuerkopf (9), der ein durch eine Membran (12) vom Niederdruckdurchgang (4) getrenntes Steuermedium (13) enthält, wobei die Membran (12) mechanisch mit dem Drosselorgan (5) verbunden ist, und mit einer extern ansteuerbaren Einrichtung zur Übersteuerung des Drosselorgans (5), **dadurch gekennzeichnet, dass** das Drosselorgan (5) als Absperrorgan ansteuerbar ist.

2. Expansionsventil nach Anspruch 1, **dadurch gekennzeichnet, dass** die Einrichtung als Peltier-Element (17) zur Kühlung des Steuerkopfes (9) ausgebildet ist.

3. Expansionsventil nach Anspruch 2, **dadurch gekennzeichnet, dass** die kalte Unterseite (17a) des Peltier-Elements (17) in Wärmekontakt mit der Außenseite (9a) des Steuerkopfes (9) steht.

4. Expansionsventil nach Anspruch 2 oder 3, **dadurch gekennzeichnet, dass** die warme Oberseite (17b) des Peltier-Element (17) kühlbar ist.

5. Expansionsventil nach Anspruch 4, **dadurch gekennzeichnet, dass** die warme Oberseite (17b) des Peltier-Elements (17) über eine Wärmebrücke (21) wärmeleitend mit dem Gehäuse (2) verbunden ist.

6. Expansionsventil nach Anspruch 5, **dadurch gekennzeichnet, dass** die Wärmebrücke (21, 21a, 21b, 21c, 21d) als metallische Verbindung ausgebildet ist.

7. Expansionsventil nach Anspruch 5 oder 6, **dadurch gekennzeichnet, dass** die Wärmebrücke (21) nach außen durch eine Thermo-Isolationsschicht (22) abgeschirmt ist.

8. Expansionsventil nach Anspruch 4, **dadurch gekennzeichnet, dass** die warme Oberseite (17b) des Peltier-Elements (17) in wärmeübertragender Verbindung mit einer Bypass-Leitung (31, 31c) steht, die an den Niederdruckdurchgang (4) angeschlossen und von Kältemitteldampf durchströmbar ist.
